# EUROPEAN PATENT SPECIFICATION

(11) **EP 2 362 240 B1**
(45) Date of publication and mention of the grant of the patent: **23.03.2016**
(21) Application number: 10194482.5
(22) Date of filing: 10.12.2010
(51) Int. Cl.: G01T 1/20, G01T 1/29

(54) **Portable radiographic imaging device**
Tragbares Röntgenbildgebungsgerät
Dispositif d'imagerie radiographique portable

(30) Priority: 26.02.2010 JP 2010042581
(43) Date of publication of application: 31.08.2011
(73) Proprietor: Fujifilm Corporation, Minato-ku Tokyo (JP)
(72) Inventor: Ohta, Yasunori, Kanagawa (JP); Kamiya, Takeshi, Kanagawa (JP); Kitagawa, Yusuke, Kanagawa (JP); Harada, Daiki, Kanagawa (JP)
(74) Representative: Klunker . Schmitt-Nilson . Hirsch

(56) References cited:
- EP-A2- 0 943 931
- US-A- 4 931 643

## Description

### BACKGROUND

### Technical Field

The present invention relates to a portable radiographic imaging device according to the preamble of claim 1. A device of this type is known from EP 0 943 931 A2. This device has a casing of metal sheets. In the bottom wall of this prior art imaging device there are provided through-holes for screws which fix a metal base of the image capture device to the casing. The casing and the base of the image capture device are thermally isolated by means of thermal insulation members through which the screws are inserted. Between the screws there are free spaces between the wall of the casing on the one hand and the metal base, on the other hand.

### Related Art

In Japanese Patent Application Laid-Open (JP-A) No. 2006-242702 a configuration for enhancing the thermal insulation properties of a portable radiographic imaging device (electronic cassette) is described, in which a filler with thermal insulation properties is disposed in a space inside a casing so as to surround an image capture device that is inside the casing.

However, in conventional technology, by merely suppressing transmission of external heat to an image capture device, heat arising in the image capture device cannot be externally discharged.

### SUMMARY

The present invention addresses suppressing heat transmission from an external heat source to inside a casing, as well as discharging heat arising inside the casing.

A first aspect of the present invention provides a portable radiographic imaging device including the features of claim 1.

According to the above configuration, the plate shaped casing, in which the radiographic image capture device and the controller are disposed, is provided to the portable radiographic imaging device. Thermal insulating material is provided to the first face of the casing for suppressing external heat from transmission to inside the casing, and heat inside the casing is externally dischargeable from the second face.

For example, when the portable radiographic imaging device is mounted to a trestle, heat from a mounting section is suppressed from transmission to inside the casing by fixing the portable radiographic imaging device to the trestle so that the first face faces the mounting section of the trestle. Heat arising inside the casing is externally discharged from the second face of the casing not facing the mounting section of the trestle.

Consequently, heat from an external heat source can be suppressed from transmission into the casing, and heat arising inside the casing can be externally discharged.

The thermal insulation material detachably provided to the first face, such that a thermal insulating material can be selected that matches the shape and thermal insulation properties requirements of the mounting section of the trestle, and attached to the first face.

The second face is provided on the opposite side to the first face, such that heat transmission from an external heat source to inside the casing can be suppressed, and heat arising inside the casing can be efficiently externally discharged.

An indicator member that indicates orientation provided to the first face, the second face, or a combination thereof, such that, when mounting the portable radiographic imaging device to the mounting section of the trestle, it can be ensured that the portable radiographic imaging device is fixed to the trestle with the mounting section and the first face facing each other.

According to the present invention, a heat dissipation member is provided to the second face, such that heat arising inside the casing can be efficiently externally discharged.

According to the present invention, the thermal insulation material is provided over the entire first face and the heat dissipation member is provided to the entire second face, such that heat transmission from an external heat source to inside the casing can be suppressed even more efficiently, and heat arising inside the casing can be externally discharged even more efficiently.

According to the present invention, heat transmission from an external heat source to inside the casing can be suppressed, and heat arising inside the casing can be externally discharged.

### BRIEF DESCRIPTION OF THE DRAWINGS

Exemplary embodiments of the present invention will be described in detail based on the following figures, wherein:
FIG. 1A and Fig. 1B are, respectively, an exploded perspective view and a perspective view showing a portable radiographic imaging device;
FIG. 2A and Fig. 2B are perspective views showing a mounting section for mounting a portable radiographic imaging device;
FIG. 3A and Fig. 3B are perspective views showing an upright trestle for mounting a portable radiographic imaging device;
FIG. 4A and Fig. 4B are perspective views showing a mounting section for mounting a portable radiographic imaging device;
FIG. 5A and Fig. 5B are perspective views showing a supine trestle for mounting a portable radiographic imaging device;
FIG. 6 is a perspective view showing a modified example of a portable radiographic imaging device;
FIG. 7 is a circuit diagram showing a portable radiographic imaging device;
FIG. 8 is a plan view showing a portable radiographic imaging device;
FIG. 9 is a cross-section showing a portable radiographic imaging device;
FIG. 10 is a cross-section showing a portable radiographic imaging device;
FIG. 11A and Fig. 11B are, respectively, an exploded perspective view and a perspective view showing a portable radiographic imaging device;
FIG. 12A and Fig. 12B are, respectively, an exploded perspective view and a perspective view showing a portable radiographic imaging device; and
FIG. 13 is a perspective view showing a portable radiographic imaging device according to an embodiment of the present invention.

### DETAILED DESCRIPTION

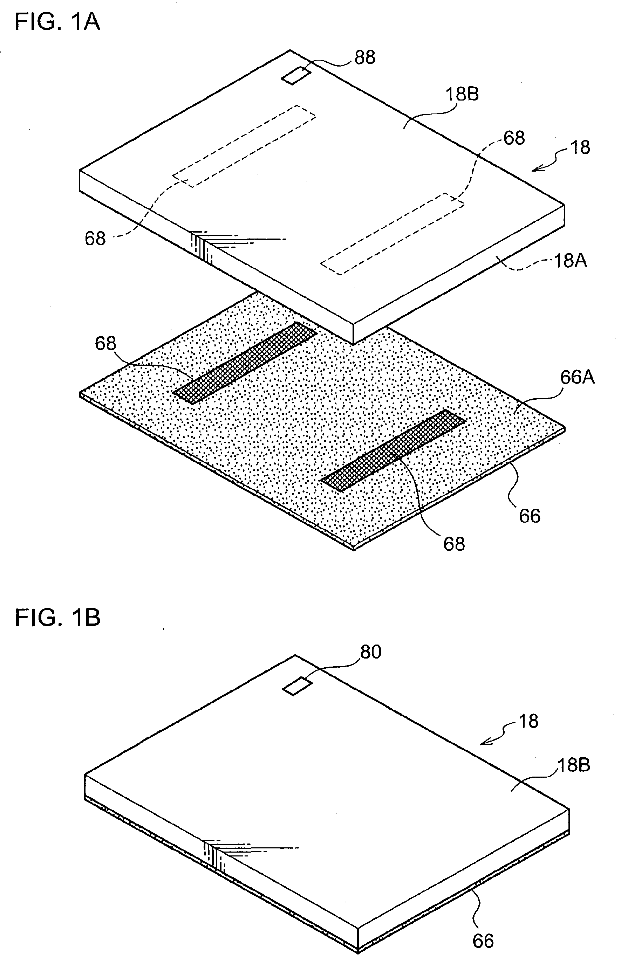

Explanation follows regarding an example of a portable radiographic imaging device, with reference to Fig. 1A to Fig. 9. In the drawings, the arrow UP indicates the vertical top direction.

### Overall Configuration

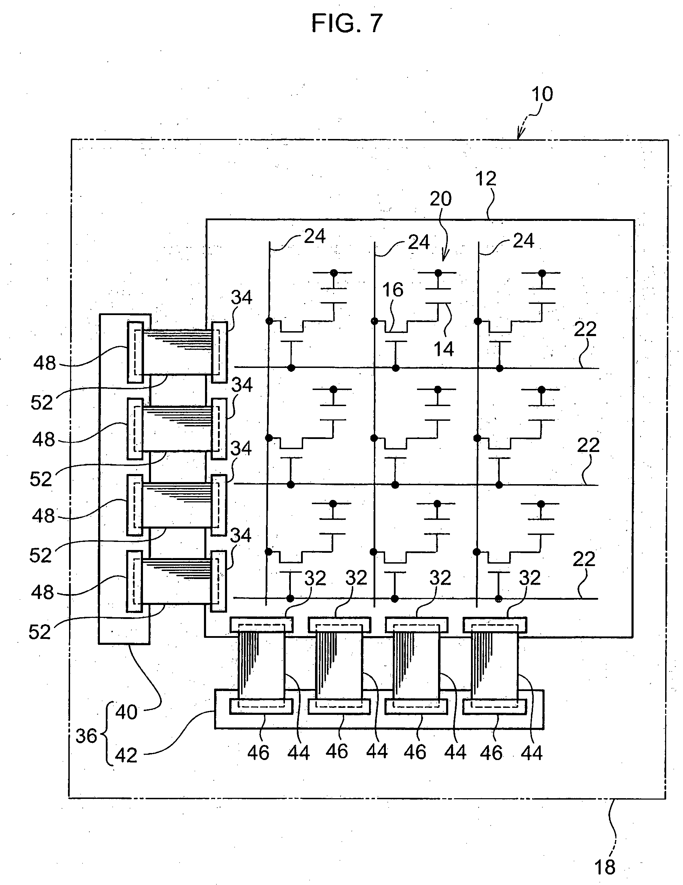

As shown in Fig. 7, a radiographic image capture device 12 is provided inside a casing 18 of a portable radiographic imaging device 10 (an electronic cassette). The radiographic image capture device 12 is equipped with an upper electrode, a semiconductor layer, and a lower electrode. Numerous pixels 20, configured by a sensor section 14 for receiving light and accumulating charge and a TFT switch 16 for reading out the charge accumulated in the sensor section 14, are provided in the radiographic image capture device 12 in a two dimensional configuration.

Plural scan lines 22 for turning the TFT switches 16 ON/OFF and plural signal lines 24 for reading out the charge accumulated in the sensor sections 14 are provided orthogonally to each other in the radiographic image capture device 12.

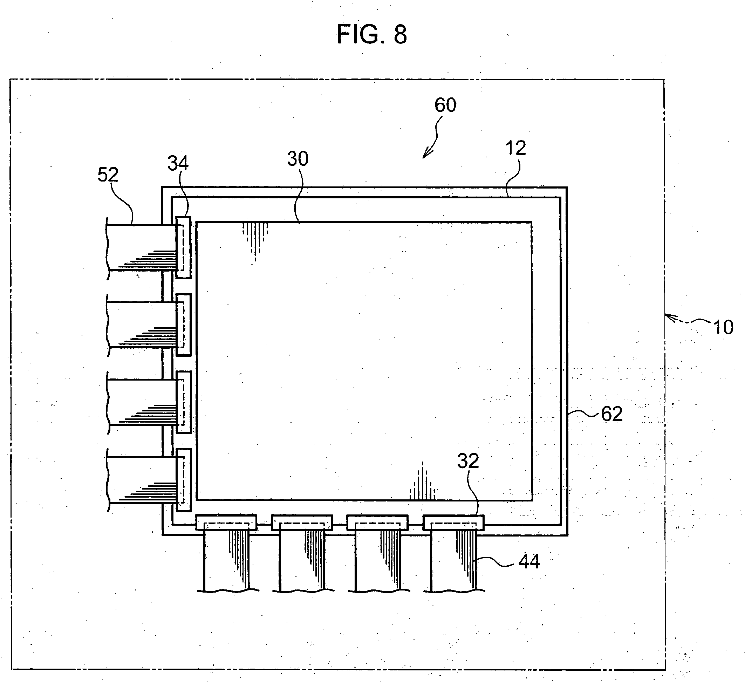

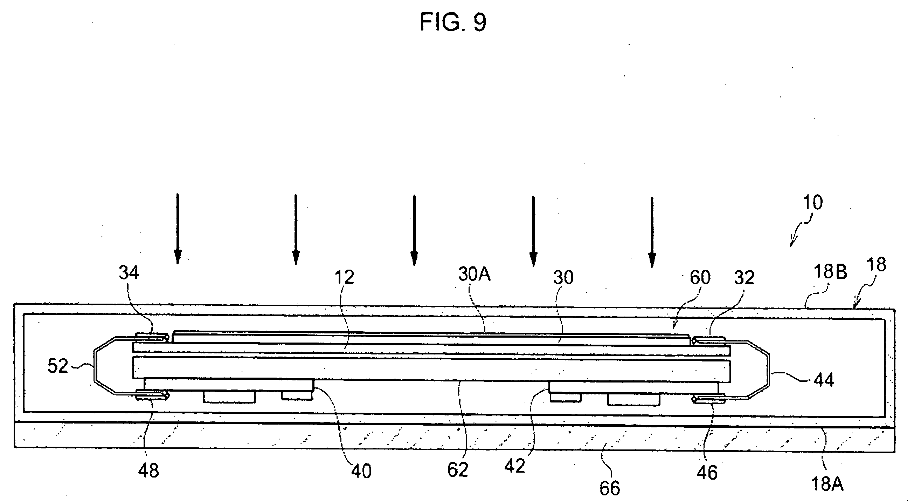

A scintillator 30 formed, for example, with GOS, CIS or the like (see Fig. 8 and Fig. 9) is adhered to the surface of the radiographic image capture device 12. In order to prevent external leakage of generated light, the scintillator 30 has a light blocking body 30A (see Fig. 9) that blocks generated light on the opposite face of the scintillator 30 from that adhered to the radiographic image capture device 12.

In the radiographic image capture device 12, irradiated radiation, such as X-rays or the like, is converted into light in the scintillator 30 and illuminated onto the sensor section 14. The sensor section 14 receives the illuminated light so as to accumulate charge.

Configuration is made such that in each of the signal lines 24, electrical signals (image signals) flow in whichever of the signal lines 24 are connected to TFT switches 16 that are ON, with the electrical signals expressing a radiographic image according to the charge amount that was accumulated in the respective sensor section 14.

For connection wiring, plural individual connectors 32 are provided in a row at one end of the radiographic image capture device 12 in the signal line direction, and plural individual connectors 34 are provide in a row at one end in the scan line direction. Each of the signal lines 24 is connected to one of the connectors 32, and each of the scan lines 22 is connected to one of the connectors 34.

A controller 36 is provided for controlling radiation detection by the radiographic image capture device 12 and for controlling signal processing on the electrical signal flowing in each of the signal lines 24. The controller 36 is equipped with a signal detection circuit 42 and a scan signal control circuit 40.

Plural individual connectors 46 are provided in the signal detection circuit 42, and one end of a flexible cable 44 is electrically connected to these connectors 46. The other end of the flexible cable 44 is connected to the connectors 32 and houses amplification circuits that amplify electrical signals input for each of the signal lines 24. Due to such a configuration, the signal detection circuit 42 detects the electrical signals that have been input by each of the signal lines 24 and amplified by the amplification circuits, so as to detect the charge amount accumulated in each of the sensor sections 14 as data for each of the pixels 20 for configuring an image.

Plural individual connectors 48 are provided in the scan signal control circuit 40, and one end of a flexible cable 52 is electrically connected to the connectors 48. The other end of the flexible cable 52 is connected to the connectors 34, and the scan signal control circuit 40 is configured to output a control signal to each of the scan lines 22 for switching the TFT switches 16 ON/OFF.

As shown in Fig. 9, the portable radiographic imaging device 10 is provided with an image capture section 60 for capturing a radiographic image expressing the irradiated radiation. The image capture section 60 has a flat plate shaped support substrate 62, with the radiographic image capture device 12 disposed on one face thereof (see Fig. 8) and the signal detection circuit 42 and the scan signal control circuit 40 corresponding to the radiographic image capture device 12 disposed on the other face of the support substrate 62.

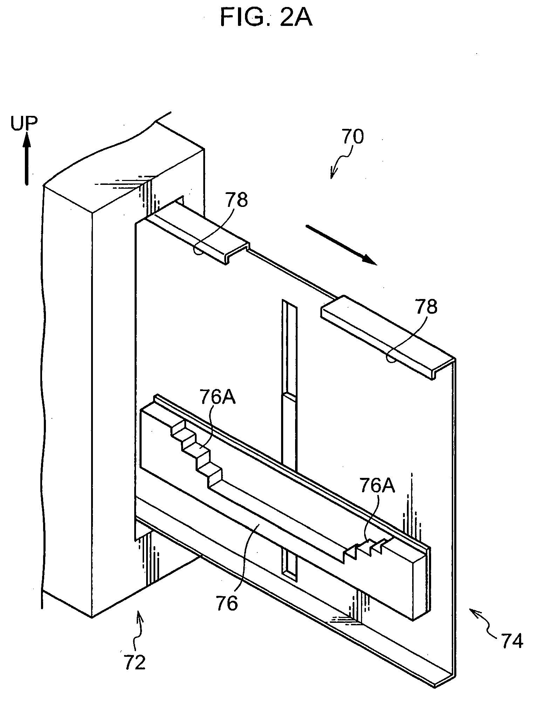

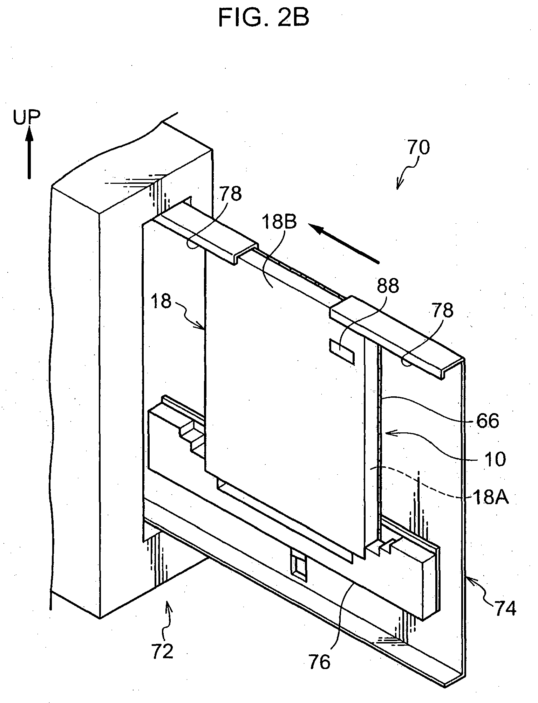

Thermal insulation material 66 is provided on one face in the thickness direction of the plate shaped casing 18, this being a first face 18A that faces a mounting section 74 of a trestle (see Fig. 2), described below. Details regarding the thermal insulation material 66 and the like are also given below.

Explanation now follows regarding the operating principle of the portable radiographic imaging device 10.

As shown in Fig. 9, with the portable radiographic imaging device 10, in order to capture, for example, an X-ray image, X-rays are irradiated onto the radiographic image capture device 12 through an imaging subject.

In the radiographic image capture device 12, irradiated radiation, such as X-rays, is converted into light in the scintillator 30, and illuminated onto the sensor section 14. The sensor section 14 receives the illuminated light from the scintillator 30 and accumulates charge.

As shown in Fig. 7, during image read-out, an ON signal (+ 10 to 20V) is applied in sequence from the scan signal control circuit 40, through the scan lines 22, to the gate electrodes of the TFT switches 16 of the radiographic image capture device 12. Due thereto, by switching the TFT switches 16 of the radiographic image capture device 12 ON in sequence, electrical signals according to the charge amount accumulated in the sensor section 14 flow out in the signal lines 24. Based on the electrical signals flowing out in the signal lines 24 of the radiographic image capture device 12, the signal detection circuit 42 detects the charge amount accumulated in the sensor section 14 as data for each of the pixels 20 configuring an image. Image data expressing an image due to radiation irradiated onto the radiographic image capture device 12 is thereby obtained.

### Relevant Configuration

Explanation now follows regarding the plate shaped thermal insulation material 66 and the like provided on the first face 18A of the casing 18.

As shown in Fig. 9, the thermal insulation material 66 is provided to the first face 18A of the casing 18 for suppressing transmission of external heat to inside the casing 18.

As shown in Fig. 1A, hook-and-loop tape 68 is provided on the first face 18A of the casing 18 and a plate thickness face 66A of the thermal insulation material 66, so as to detachably fix the thermal insulation material 66 to the first face 18A of the casing 18. By employing the hook-and-loop tape 68, the thermal insulation material 66 is configured so as to be detachably fixed to the first face 18A of the casing 18 (see Fig. 1B).

No thermal insulation material is provided to a second face 18B that is the opposite face to the first face 18A, in order that heat within the casing 18 is able to be externally discharged from the second face 18B. An indicator member 88 indicating that this is the second face 18B (indicating that it is not the face to which thermal insulation material is attached) is provided to the second face 18B.

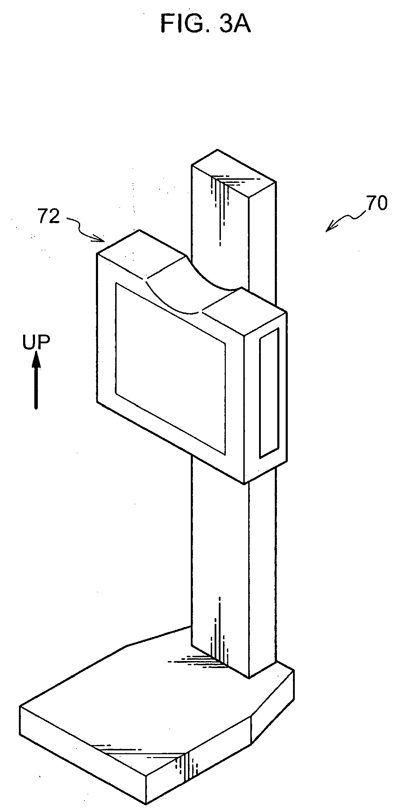

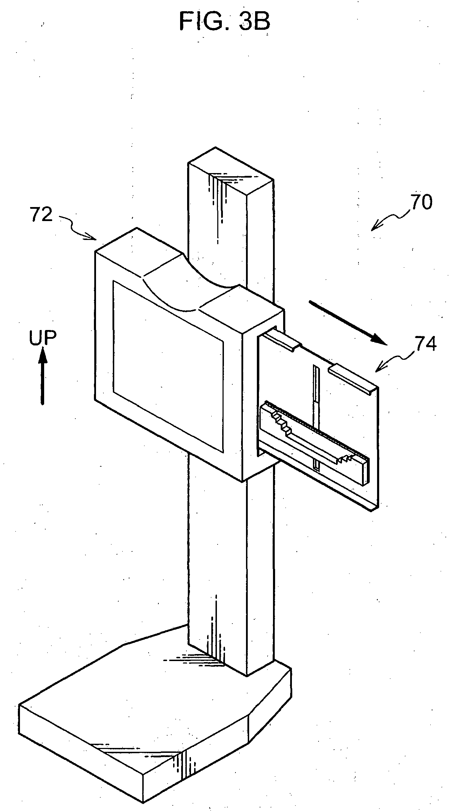

As shown in Fig. 3A and Fig. 3B, a mounting section 74 is provided to an image capture unit 72 of an upright trestle 70 employed when the image capture state is upright, such that the mounting section 74 can be pulled out from a side face of the image capture unit 72 and the portable radiographic imaging device 10 (see Fig. 9) is mounted to the mounting section 74.

As shown in Fig. 2A and Fig. 2B, a placement section 76 is provided to the mounting section 74, the placement section 76 has the portable radiographic imaging apparatus 10 placed thereon and is movable up and down. A stepped section 76A is provided to the placement section 76, and the bottom edge of the portable radiographic imaging device 10 fits into the stepped section 76A. The stepped section 76A is a stepped shape so as to accommodate plural sizes of portable radiographic imaging device 10.

L-shaped hooked portions 78 are provided at top edge portions of the mounting section 74, and the top edge of the portable radiographic imaging device 10 placed on the placement section 76 is hooked by the hooked portions 78.

With the above configuration, while looking at the indicator member 88 attached to the second face 18B, the portable radiographic imaging device 10 is fixed to the upright trestle 70 with the first face 18A of the casing 18 of the portable radiographic imaging device 10 facing the mounting section 74.

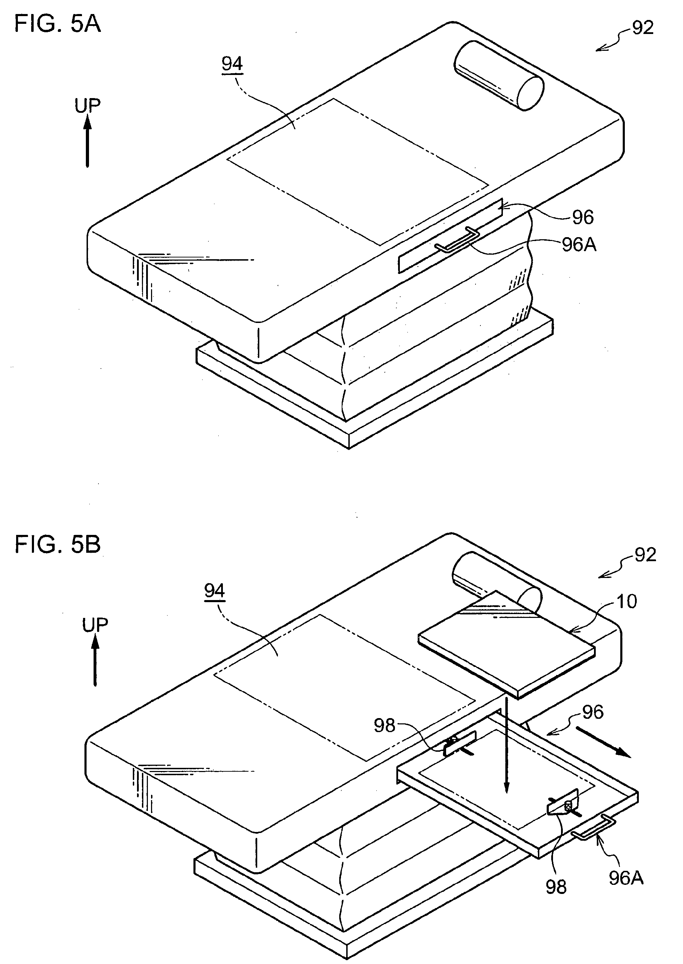

In contrast thereto, as shown in Fig. 5A and Fig. 5B, a mounting section 96 is provided to an image capture unit 94 of a supine trestle 92 employed when the image capture state is supine, such that the mounting section 96 can be pulled out from a side face of the image capture unit 94 and mounted with the portable radiographic imaging device 10 (see Fig. 9).

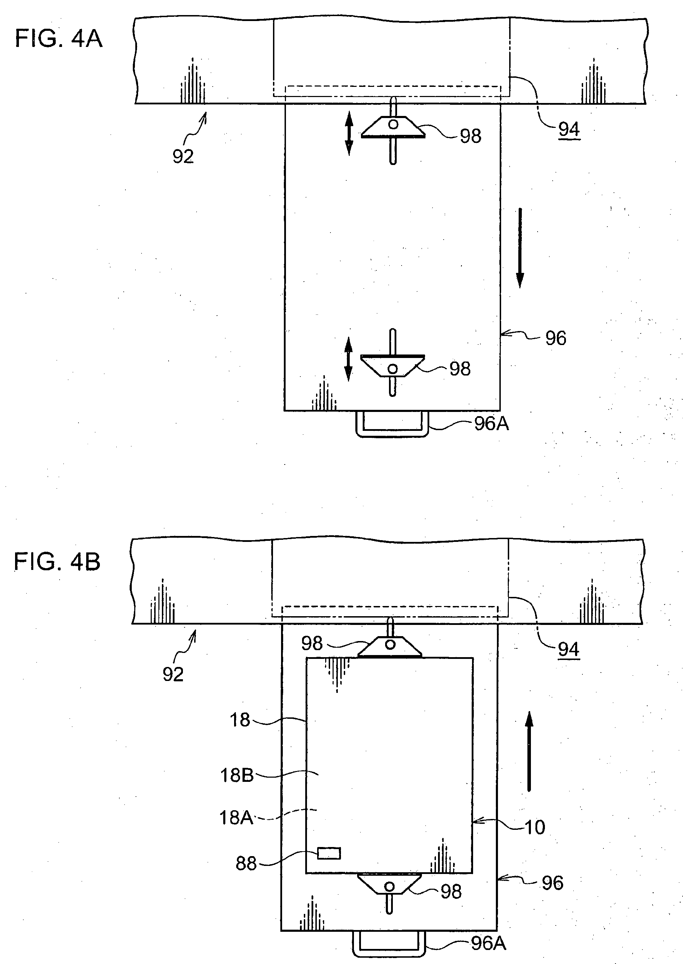

As shown in Fig. 4A and Fig. 4B, a handle 96A is provided for pulling the mounting section 96 out from the image capture unit 94. A pair of press members 98 is provided to the mounting section 96 pulled out from the image capture unit 94 by gripping the handle 96A. The press members 98 are movable in the pulling out direction of the mounting section 96 and press the portable radiographic imaging device 10 from two side faces of the portable radiographic imaging device 10, fixing the portable radiographic imaging device 10 to the mounting section 96.

With the above configuration, while looking at the indicator member 88 attached to the second face 18B, the portable radiographic imaging device 10 is fixed to the supine trestle 92 with the first face 18A of the casing 18 of the portable radiographic imaging device 10 facing the mounting section 96.

### Operation and Effect

As shown in Fig. 2B, in order to mount the portable radiographic imaging device 10 to the upright trestle 70, while watching the indicator member 88 provided to the second face 18B, the portable radiographic imaging device 10 is mounted to the upright trestle 70 such that the first face 18A faces the mounting sections 74.

Then, the mounting section 74 mounted with the portable radiographic imaging device 10 is pressed into the image capture unit 72, and X-ray image capture is performed in this state. Suppose that the temperature of the mounting section 74 has become a specific temperature, such an air conditioned room temperature or the like. In contrast, since the portable radiographic imaging device 10 has been brought in from a different location to the room in which the upright trestle 70 is disposed, sometimes there is a difference in temperature between the temperature of the mounting section 74 and the temperature of the portable radiographic imaging device 10.

However, since the thermal insulation material 66 is provided to the first face 18A that faces the mounting section 74, the temperature of the mounting section 74 can be suppressed from transmission to inside the casing 18 of the portable radiographic imaging device 10.

During X-ray image capture, heat arising from the internally provided radiographic image capture device 12 and the like is discharged (thermally dissipated) from the second face 18B not provided with thermal insulation material or the like.

As shown in Fig. 4B, in order to mount the portable radiographic imaging device 10 to the supine trestle 92, while watching the indicator member 88 provided to the second face 18B, the portable radiographic imaging device 10 is mounted to the supine trestle 92 such that the first face 18A faces the mounting section 96.

The mounting section 96 mounted with the portable radiographic imaging device 10 is pressed into the image capture unit 94, and X-ray image capture is performed in this state. Suppose the temperature of the mounting section 96 has become a specific temperature, such as an air conditioned room temperature or the like. In contrast thereto, since the portable radiographic imaging device 10 has been brought in from a different location to the room in which the supine trestle 92 is disposed, sometimes there is a difference in temperature between the temperature of the mounting section 96 and the temperature of the portable radiographic imaging device 10.

However, since the thermal insulation material 66 is provided to the first face 18A that faces the mounting section 96, the temperature of the mounting section 96 is suppressed from transmission to inside of the casing 18 of the portable radiographic imaging device 10.

During X-ray image capture, heat arising from the internally provided radiographic image capture device 12 and the like is discharged (thermally dissipated) from the second face 18B not provided with thermal insulation material or the like.

As explained above, the thermal insulation material 66 is provided to the first face 18A and the second face 18B is not provided with thermal insulation material, enabling internal heat to be discharged from the second face 18B. Accordingly, heat can be suppressed from transmission from the mounting sections 74, 96 (external heat sources) to inside of the casing 18, and also heat arising inside the casing 18 can be externally dissipated.

By suppressing heat transmission from outside to inside the casing 18 and by externally discharging heat arising inside to the casing 18, unevenness in temperature of the internally disposed radiographic image capture device 12, the scintillator 30 and the like is suppressed. Uneven density of output images can thereby be suppressed.

By making the thermal insulation material 66 detachable from the casing 18, a thermal insulation material 66 can be selected that matches the shape and necessary thermal insulation properties of the mounting sections 74, 96 and mounted to the first face 18A.

By providing the second face 18B on the opposite side to that of the first face 18A, not only is heat suppressed from transmission from the mounting sections 74, 96 (external heat sources) to inside the casing 18, but also heat arising inside the casing 18 can be externally dissipated.

Since the indicator member 88 is provided to the second face 18B, when mounting the portable radiographic imaging device 10 to the mounting sections 74, 96, the portable radiographic imaging device 10 can be fixed to the mounting sections 74, 96 with certainty that the mounting sections 74, 96 and the first face 18A are facing each other.

In the above examples, the indicator member 88 is provided to the second face 18B ensure that the mounting sections 74, 96 and the first face 18A face each other, however there is no particular limitation thereto. Configuration may be made, for example, with an indicator member provided on the first face 18A, or indicator members may be provided on both the first face 18A and the second face 18B.

Furthermore, in the above exemples, the thermal insulation material 66 is attached to the outside of the first face 18A so as to be superimposed on the first face 18A, however there is no particular limitation thereto, and thermal insulation material may be attached to the inside of the first face 18A.

In the above examples, when attaching the thermal insulation material 66 to the casing 18 causes the thickness of the portable radiographic imaging device 10 to exceed a standard, the thickness of the portable radiographic imaging device 10 may be brought within the standard by making the casing thinner.

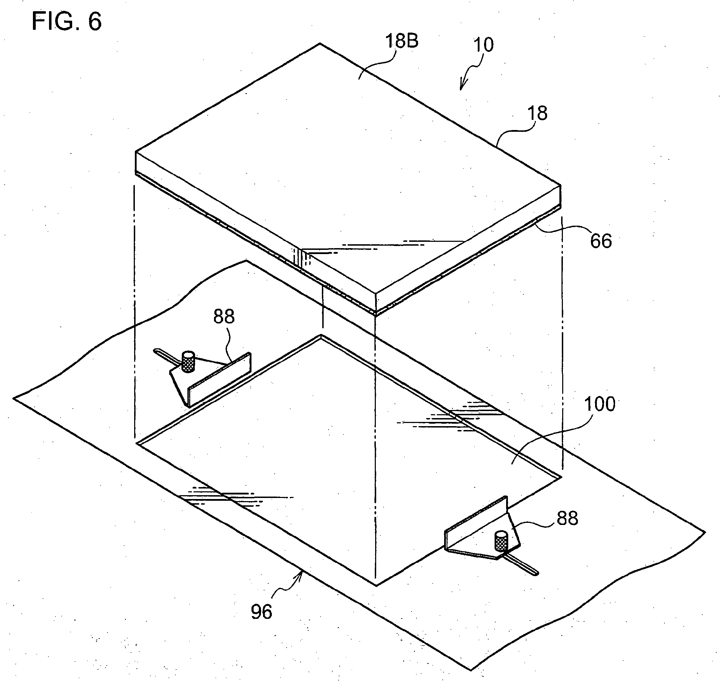

In the above examples, when attaching the thermal insulation material 66 to the first face 18A causes the thickness of the portable radiographic imaging device 10 to exceed a standard, as shown in Fig. 6, configuration may be made with a recess 100 provided to a portion of the mounting section 96, and the portable radiographic imaging device 10 disposed such that the thermal insulation material 66 enters the recess 100, with the determined distance between the second face 18B and the X-ray generation section (not shown in the drawings).

In the above examples, the thermal insulation material 66 may also be provided with an X-ray screening layer. By so doing, the electronic components are disposed on the opposite side to the X-ray generation section, with the thermal insulation material 66 interposed therebetween, protecting the electronic components from exposure.

In the above examples, materials that can be employed as the thermal insulation material 66 include: organic thermal insulation materials employing natural materials, such as cork and the like, or organic synthetic materials, such as polyethylene foam and the like; and inorganic thermal insulation materials such as rock wool and the like.

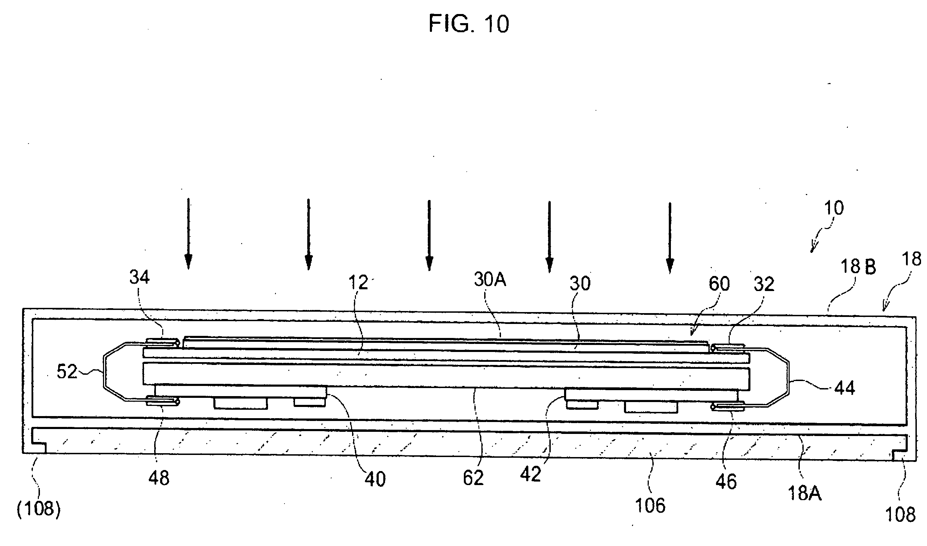

Explanation now follows regarding an example of a portable radiographic imaging device with reference to Fig. 10.

As shown in Fig. 10, a thermal insulation material 106 is not fixed to the casing 18 like by hook-and-loop tape. Instead, the thermal insulation material 106 is fixed to the casing 18 by outer peripheral end portions of the 106 being retained by L-shaped retaining portions 108 that protrude out from the outer peripheral edge of the casing 18.

By retaining the outer peripheral end portions of the thermal insulation material 106 with the retaining portions 108, the thermal insulation material 106 can be fixed to the casing 18 without employing hook-and-loop tape.

In the above example, the thermal insulation material 106 is fixed to the casing 18 by retaining the outer periphery of the thermal insulation material 106, however thermal insulation material may be provided on a bottom plate of a recessed lid member, and the thermal insulation material fixed to the casing by attaching the lid member to the casing (like attaching a lid on a sandwich box).

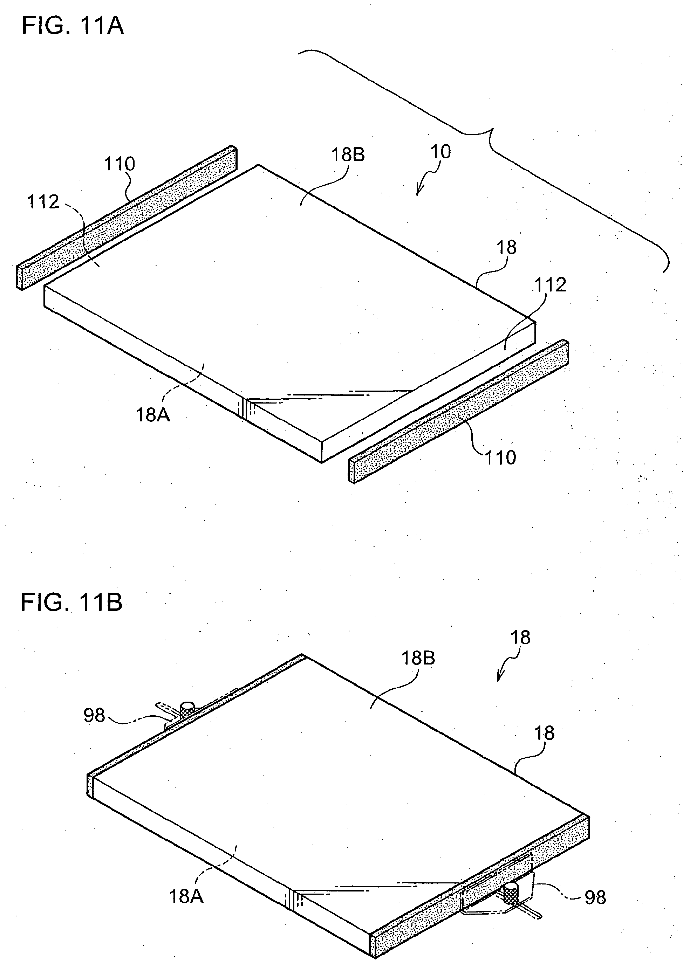

Explanation now follows regarding an example of a portable radiographic imaging device, with reference to Fig. 11A and Fig. 11B.

As shown in Fig. 11A and Fig. 11B, first faces 112 attached with thermal insulation material 110 are not faces of the casing 18 in the thickness direction, but are the pair of side faces that make contact with the pair of press members 98 provided to the mounting section.

By providing the thermal insulation material 110 to the first faces 112, which are side faces, the heat of the press members 98 can be suppressed from transmission to inside the casing 18.

In the above exemple, by employing a material having high thermal insulation properties in the thermal insulation material 110 where contact is made with the press members 98, the heat from the press members 98 can be effectively suppressed from transmission to inside of the casing 18.

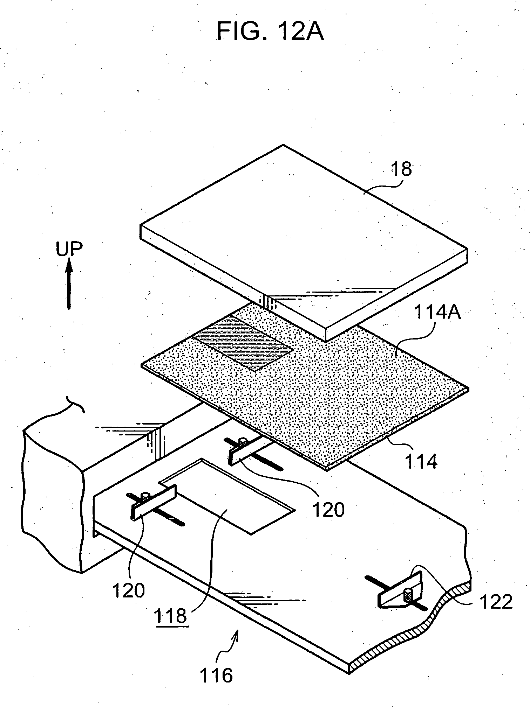

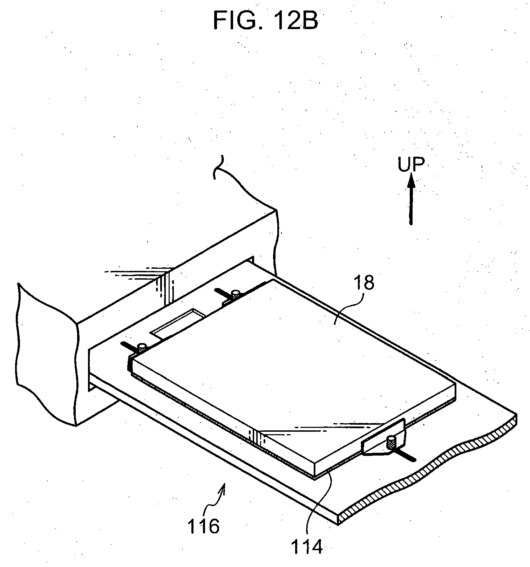

Explanation now follows regarding an example of a portable radiographic imaging device, with reference to Fig. 12A and Fig. 12B.

As shown in Fig. 12A and Fig. 12B, a square shaped opening 118 is provided passing through from front to back in a mounting section 116 that faces a thermal insulation material 114. Two individual press members 120 are provided on either side of the opening 118 for pressing one side face of the casing 18. A press member 122 is also provided so as to face the pair of press member 122 for pressing another side face of the casing 18.

A material having high thermal insulation properties is employed for portions at position 114A of a thermal insulation material 114 facing the mounting section 116 other than at the opening 118.

Accordingly, by providing the material of high thermal insulation properties at the position 114A facing the mounting section 116, heat of the mounting section 116 can be effectively suppressed from transmission to inside the casing 18.

Note that in Fig. 12A, in order to make clear the region of the position 114A, hook-and-loop tape has been omitted from the drawing.

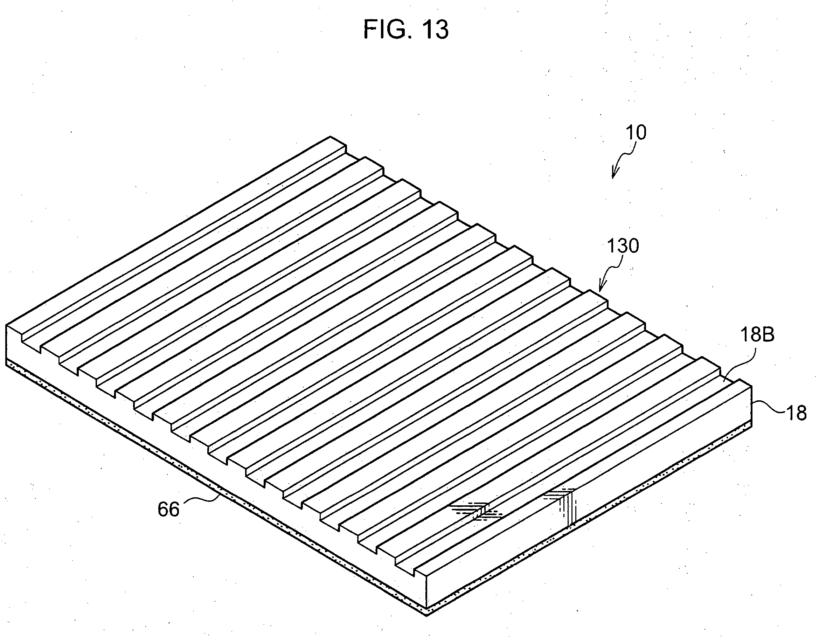

Explanation now follows regarding an example of a portable radiographic imaging device according to an embodiment of the present invention, with reference to Fig. 13.

As shown in Fig. 13, heat dissipation fins 130 are provided as an example of heat dissipation members over the entire second face 18B of the casing 18 in the fifth exemplary embodiment.

Accordingly, by providing the heat dissipation fins 130, the heat inside the casing 18 can be effectively externally discharged.

## Claims

1. A portable radiographic imaging device (10) comprising:
a radiographic image capture device (12) that outputs an image signal expressing a radiographic image according to an irradiated radiation amount;
a controller (36) that performs image processing on the image signal output by the radiographic image capture device (12); and
a casing (18), inside which the radiographic image capture device and the controller are disposed, the casing (18) comprising,
a first face (18A) and
provided on the opposite side to the first face (18A)
a second face (18B) capable of externally discharging heat from inside the casing, **characterized in that** to said first face (18A) thermal insulation material (66, 114) is provided that suppresses external heat from transmission to inside the casing, and
the thermal insulation material (66, 114) is provided over the entire first face (18A) and a heat dissipation member (130) is provided to the entire second face (18B).

2. The portable radiographic imaging device of claim 1, wherein the thermal insulation material (66) is detachably provided to the first face (18A).

3. The portable radiographic imaging device of claim 1 or 2, wherein an indicator member (88) that indicates orientation is provided to the first face (18A), the second face (18B), or a combination thereof.

## Patentansprüche

1. Tragbares Röntgenbildgerät (10), umfassend:
ein Röntgenbildaufnahmegerät (12), welches ein Bildsignal ausgibt, das abhängig von einer aufgestrahlten Strahlungsmenge ein Röntgenbild darstellt;
eine Steuerung (35), die an dem von dem Röntgenbildaufnahmegerät (12) ausgegebenen Bildsignal eine Bildverarbeitung ausführt; und
ein Gehäuse (18), in welchem das Röntgenbildaufnahmegerät und die Steuerung angeordnet sind, wobei das Gehäuse (18) aufweist:
eine erste Seite (18A) und
eine abgewandt von der ersten Seite (18A) befindliche zweite Seite (18B), die in der Lage ist, Wärme aus dem Inneren des Gehäuses nach außen zu transportieren, **dadurch gekennzeichnet, dass** an der ersten Seite (18A) ein Wärmeisoliermaterial (66, 114) vorgesehen ist, welches eine Übertragung von äußerer Wärme in das Innere des Gehäuses unterdrückt, und
das Wärmeisoliermaterial (66, 114) auf der gesamten ersten Seite (18A) vorgesehen ist, und sich auf der gesamten zweiten Seite (18B) ein Wärmeableitelement (130) befindet.

2. Tragbares Röntgenbildgebungsgerät nach Anspruch 1, bei dem das Wärmeisoliermaterial (66) lösbar an der ersten Seite (18A) vorgesehen ist.

3. Tragbares Röntgenbildgebungsgerät nach Anspruch 1 der 2, bei dem an der ersten Seite (18A), der zweiten Seite (18B) oder einer Kombination derselben ein Anzeigeelement (88) vorgesehen ist, welches eine Orientierung angibt.

## Revendications

1. Dispositif d'imagerie radiographique portable (10), comprenant :
un dispositif de capture d'image radiographique (12) qui émet un signal image exprimant une image radiographique conformément à une quantité de rayonnement irradiée;
un contrôleur (36) qui exécute un traitement d'image sur le signal image émis par le dispositif de capture d'image radiographique (12), et
un boîtier (18), à l'intérieur duquel le dispositif de capture d'image radiographique et le contrôleur sont disposés, le boîtier (18) comprenant :
une première face (18A), et
fournie sur le côté opposé à la première face (18A), une seconde face (18B) apte à décharger de manière externe une chaleur provenant de l'intérieur du boîtier,
**caractérisé en ce que** ladite première face (18A) est dotée d'un matériau thermo-isolant (66, 114) qui supprime la transmission de chaleur externe à l'intérieur du boîtier, et
le matériau thermo-isolant (66, 114) est fourni sur toute la première face (18A), et un élément de dissipation de la chaleur (130) est fourni sur toute la seconde face (18B).

2. Dispositif d'imagerie radiographique portable selon la revendication 1, dans lequel le matériau thermo-isolant (66) est fourni de manière amovible sur la première face (18A).

3. Dispositif d'imagerie radiographique portable selon la revendication 1 ou 2, dans lequel un élément indicateur (88) indiquant l'orientation est fourni sur la première face (18A), la seconde face (18B), ou une combinaison de celles-ci.
